(19) Europäisches Patentamt
European Patent Office
Office européen des brevets

(11) **EP 3 745 574 B1**

(12) **EUROPEAN PATENT SPECIFICATION**

(45) Date of publication and mention
of the grant of the patent:
**23.02.2022 Bulletin 2022/08**

(21) Application number: **20177279.5**

(22) Date of filing: **28.05.2020**

(51) International Patent Classification (IPC):
*H02M 1/42* *(2007.01)*     *H02M 1/12* *(2006.01)*

(52) Cooperative Patent Classification (CPC):
**H02M 1/4208; H02M 1/12; H02M 1/4225;**
H02M 1/0025; Y02B 70/10; Y02P 80/10

(54) **POWER FACTOR CORRECTION CIRCUIT, CONTROL METHOD AND CONTROLLER**

LEISTUNGSFAKTORKORREKTURSCHALTUNG, STEUERVERFAHREN UND STEUERGERÄT

CIRCUIT DE CORRECTION DE FACTEUR DE PUISSANCE, PROCÉDÉ DE COMMANDE ET ORGANE DE COMMANDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.05.2019 CN 201910470685**

(43) Date of publication of application:
**02.12.2020 Bulletin 2020/49**

(73) Proprietor: **Silergy Semiconductor Technology (Hangzhou) Ltd**
**Zhejiang 310051 (CN)**

(72) Inventors:
• **WANG, Zhaofeng**
  **Zhejiang, 310051 (CN)**
• **HUANG, Xiaodong**
  **Zhejiang, 310051 (CN)**
• **ZHAO, Chen**
  **Zhejiang, 310051 (CN)**

(74) Representative: **Ström & Gulliksson AB**
**P.O. Box 793**
**220 07 Lund (SE)**

(56) References cited:
WO-A1-2015/099656     US-A1- 2007 103 947
US-A1- 2013 033 907     US-A1- 2018 269 779

**Description**

**FIELD**

The present disclosure relates to power electronic technology, and in particular to a power factor correction circuit, a control method and a controller.

**BACKGROUND**

A power factor (PF) is expressed by a cosine function of a phase difference between a voltage and a current. The power factor may also be expressed by a ratio of an effective power to an apparent power. The power factor is used for characterizing an electrical efficiency of an electrical device. A low power factor represents a low electrical efficiency. A phase difference between a voltage and a current may be eliminated or reduced by performing a power factor correction (PFC) operation, so as to improve a power factor of a system, such that a transmission efficiency of active power is increased, and a grid environment is improved.

In an active PFC circuit, a fast adjustment is generally performed on an input current in a closed-loop control manner, such that an input current of the PFC circuit can change following a sine alternating-current input voltage in real time, thereby performing power factor correction. A high demand on the power factor correction regarding a total harmonic distortion (THD) has been imposed by the current industries. In addition to a demand on the total harmonic distortion in an overloading condition, a demand on the total harmonic distortion in a half-loading condition and even a light-loading condition is also imposed, which has approximately the same specification as that in the overloading condition.

In a conventional solution for reducing the total harmonic distortion, a theoretical analysis is generally performed on a factor affecting a total harmonic distortion indicator, to provide a compensation control strategy based on an established model. However, this solution is only applicable under a specific condition.

US 2018/0269779 A1 discloses a power factor correction circuit and a method of controlling a switching-type regulator with power factor correction. The power factor correction circuit includes a power meter configured to measure total harmonic distortion (THD) at an input port; a switching-type regulator that is controllable by a switching control signal in order to adjust a power factor of an input signal thereof; and a controller configured to generate the switching control signal to control the switching-type regulator to perform power factor correction, where the controller minimizes the THD by adjusting a current reference signal according to a measured THD and amplitude ratios of harmonic components.

**SUMMARY**

In view of this, a power factor correction circuit, a control method and a controller applying the control method are provided according to the present disclosure, to reduce a total harmonic distortion of a power factor correction circuit with a universal method.

According to a first aspect of the present disclosure, a power factor correction circuit is provided. The power factor correction circuit includes a power meter configured to measure a total harmonic distortion (THD) and an amplitude ratio of each harmonic component at an input port; a switching-type regulator that is controllable by a switch control signal in order to adjust a power factor; and a controller configured to generate the switch control signal to control the switching-type regulator to perform power factor correction, wherein the controller decreases the THD by adjusting a current reference signal according to the measured THD and the amplitude ratio of each harmonic component. The controller is configured to adjust the current reference signal by superimposing at least one predetermined harmonic component on the current reference signal, where the controller is configured to adjust, based on the measured THD, a phase of each of the at least one predetermined harmonic component to minimize the THD.

Preferably, the controller is configured to set, based on the measured amplitude ratio of a corresponding harmonic component, an amplitude ratio of the predetermined harmonic component; and adjust the phase of the predetermined harmonic component in a predetermined order until the measured THD is no longer decreased.

Preferably, the phase of the predetermined harmonic component is adjusted by progressively increasing the phase from 0 until the measured THD is no longer decreased.

Preferably, phase partition is performed, and a phase range where the phase of the predetermined harmonic component is located is determined, and the phase of the predetermined harmonic component is adjusted within the phase range until the measured THD is no longer decreased.

Preferably, a midpoint of the phase range where the phase of the harmonic component is located is determined as a reference point, and whether a phase adjustment direction is a phase increasing direction or a phase decreasing direction is determined, and the phase of the predetermined harmonic component is adjusted based on the determined phase adjustment direction from the reference point until the measured THD is no longer decreased..

Preferably, the controller is configured to perform at least one of a) superimposing at least one voltage harmonic component corresponding to the at least one predetermined harmonic component on an input voltage sampling signal to generate a superimposition signal, wherein the voltage harmonic component has a same amplitude ratio as a corresponding harmonic component at the input port and has an opposite phase to the corresponding harmonic component; and multiplying the superimposition signal by a compensation signal to generate the current reference signal, wherein the input voltage sampling signal represents an input voltage of the switching-type regulator, the predetermined harmonic component is acquired based on the input voltage sampling signal, and the compensation signal represents a difference between a voltage reference signal and an output voltage; or b) multiplying at least one voltage harmonic component corresponding to the at least one predetermined harmonic component by the compensation signal respectively to generate at least one multiplied signal, wherein the voltage harmonic component has a same amplitude ratio as a corresponding harmonic component at the input port and has an opposite phase to the corresponding harmonic component; and superimposing all the at least one multiplied signal on a product signal of the input voltage sampling signal and the compensation signal to generate the current reference signal, wherein the input voltage sampling signal represents an input voltage of the switching-type regulator, the predetermined harmonic component is acquired based on the input voltage sampling signal, and the compensation signal represents the difference between the voltage reference signal and the output voltage.

Preferably, the voltage harmonic component is obtained by acquiring a product signal of the predetermined harmonic component and the amplitude ratio corresponding to the predetermined harmonic component and then performing phase adjustment on the product signal.

Preferably, the voltage harmonic component is obtained by performing phase adjustment on the predetermined harmonic component to generate a first signal, and then acquiring a product signal of the first signal and the amplitude ratio corresponding to the predetermined harmonic component.

Preferably, each of the at least one predetermined harmonic component is adjacent to a fundamental component.

In a second aspect, a control method for controlling a switching-type regulator to perform power factor correction is provided. The control method includes measuring a total harmonic distortion (THD) and an amplitude ratio of each harmonic component at an input port and adjusting, based on the measured THD and the amplitude ratio of each harmonic component, a current reference signal of the switching-type regulator to minimize the THD The current reference signal is adjusted by superimposing at least one predetermined harmonic component on the current reference signal. The current reference signal of the switching-type regulator is adjusted by adjusting, based on the measured THD, a phase of each of the at least one predetermined harmonic component to minimize the THD

Preferably, the amplitude ratio of the predetermined harmonic component is set based on the measured amplitude ratio of a corresponding harmonic component, and then the phase of the predetermined harmonic component is adjusted in a predetermined order until the measured THD is no longer decreased.

Preferably, the phase of the predetermined harmonic component is adjusted by progressively increasing the phase from 0 until the measured THD is no longer decreased.

Preferably, phase partition is performed, and a phase range where the phase of the predetermined harmonic component is located is determined, and the phase of the predetermined harmonic component is adjusted within the phase range until the measured THD is no longer decreased.

Preferably, a midpoint of the phase range where the phase of the harmonic component is located is determined as a reference point, and whether a phase adjustment direction is a phase increasing direction or a phase decreasing direction is determined, and the phase of the predetermined harmonic component is adjusted based on the determined phase adjustment direction from the reference point until the measured THD is no longer decreased.

Preferably, the method further comprises at least one of a) superimposing at least one voltage harmonic component corresponding to the at least one predetermined harmonic component on an input voltage sampling signal to generate a superimposition signal, wherein the voltage harmonic component has a same amplitude ratio as a corresponding harmonic component at the input port and has an opposite phase to the corresponding harmonic component; and multiplying the superimposition signal by a compensation signal to generate the current reference signal, wherein the input voltage sampling signal represents an input voltage of the switching-type regulator, and the predetermined harmonic component is acquired based on the input voltage sampling signal, and the compensation signal represents a difference between a voltage reference signal and an output voltage; or b) multiplying at least one voltage harmonic component corresponding to the at least one predetermined harmonic component by the compensation signal respectively to generate at least one multiplied signal, wherein the voltage harmonic component has a same amplitude ratio as a corresponding harmonic component at the input port and has an opposite phase to the corresponding harmonic component; and superimposing all the at least one multiplied signal on a product signal of the input voltage sampling signal and the compensation signal to generate the current reference signal, wherein the input voltage sampling signal represents an input voltage of the switching-type regulator, and the predetermined harmonic component is acquired based on the input voltage sampling signal, and the compensation signal represents the difference between the voltage reference signal and the output voltage.

In a third aspect, a controller is provided. The controller includes a memory configured to store instructions, and a processor adapted to perform the method of claim 12 by executing said instruction.

According to the technical solution of the present disclosure, a current reference signal is adjusted based on a total harmonic distortion (THD) and an amplitude ratio of each harmonic component that are measured at an input port, to minimize the total harmonic distortion while performing power factor correction, such that the total harmonic distortion can be effectively reduced without performing a specific compensation design for a single category of factors affecting total harmonic distortion indicators, thereby simplifying the control method.

## BRIEF DESCRIPTION OF THE DRAWINGS

The above and other objects, features and advantages of the present invention are apparent from the following description of the embodiments of the present invention with reference to the drawings. In the drawings:

FIG. 1 is a schematic diagram of an example power factor correction circuit according to the present disclosure;

FIG. 2 is a schematic diagram of an example power stage circuit of an example power factor correction circuit according to embodiments of the present disclosure;

FIG. 3 is a flowchart of a control method according to the present disclosure;

FIG. 4 is a flowchart of a first method for adjusting a phase of a harmonic component according to the present disclosure;

FIG. 5 is a flowchart of a second method for adjusting a phase of a harmonic component according to the present disclosure;

FIG. 6 is a diagram showing a data flow in a controller according to the conventional technology;

FIG. 7 is a diagram showing a data flow in a controller according to a first embodiment of the present disclosure;

FIG. 8 is a diagram showing a data flow in a controller according to a second embodiment of the present disclosure;

FIG. 9 is an operation waveform diagram of an example power factor correction circuit according to an embodiment of the present disclosure; and

FIG. 10 is an operation waveform diagram of another example power factor correction circuit according to another embodiment of the present disclosure.

## DETAILED DESCRIPTION OF EMBODIMENTS

The present disclosure is described on the basis of the embodiments hereinafter, but the present disclosure is not limited to these embodiments. In the detailed description of the present disclosure hereinafter, numerous specific details are set forth. Those skilled in the art may understand the present disclosure without these specific details. To avoid obscuring the substance of the present disclosure, well-known methods, procedures, flows, elements and circuits are not described in detail.

In addition, those skilled in the art should understand that the drawings are provided herein for illustration, which are not drawn to scale.

In addition, it should be understood that in the following description, the term "circuit" indicates a conductive loop forming by at least one element or sub-circuit through electrical connections or electromagnetic connections. When referring to that an element or a circuit is "connected to" another element or that an element or a circuit is "connected between" two nodes, it may indicate that the element or the circuit is directly coupled or connected to another element or there is an intermediate element. The elements may be connected in a physical manner, a logical manner, or a combination thereof. In addition, when referring to that an element is "directly coupled" or "directly connected" to another element, it indicates that there is no intermediate element therebetween.

Unless otherwise stated, the terms "include", "comprise" or any other variations in the specification and claim are intended to be containing, rather than exclusive or exhaustive. That is, the terms indicate "including, but not limited to".

In the description of the present disclosure, it should be understood that the terms such as "the first" and "the second" herein are only used for description, rather than indicating or suggesting relative importance. Furthermore, in the description of the present disclosure, unless otherwise stated, the term "multiple" indicates two or more.

Harmonic distortion indicates that an output signal includes other harmonic component than an input signal due to a nonlinear element in a system. Total harmonic distortion (THD) is defined as a square root of a square sum of a ratio of an effective value $G_n$ of each harmonic component to an effective value $G_1$ of a fundamental component within a certain order, that is,

$$\text{THD} = \sqrt{\sum_{n=2}^{H} (\frac{G_n}{G_1})^2}$$

.

In a case that total harmonic distortion (THD) of a device is too high, wave distortion may be caused to a voltage and a current in a power network, to affect a normal operation of other devices in the power network. In an active power factor correction (PFC) circuit, an input current may include a high-order harmonic component due to a nonlinear element in the circuit. In order to not affect the operation of the power network, it is required to reduce the total harmonic distortion (THD).

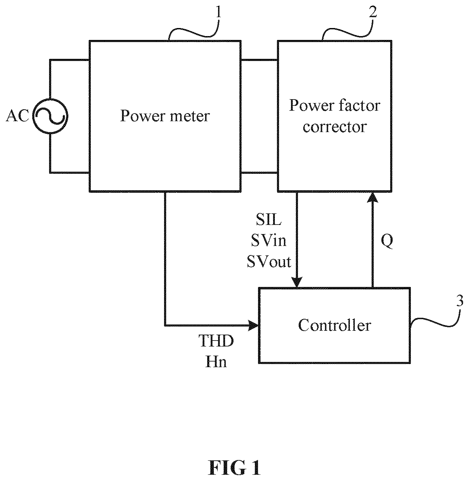

FIG. 1 is a schematic diagram of an example power factor correction circuit according to the present disclosure. As shown in FIG. 1, in the embodiment, the power factor correction circuit includes a power meter 1, power factor corrector 2 and controller 3. Power meter 1 and power factor corrector 2 constitute a power stage circuit of the power factor correction circuit.

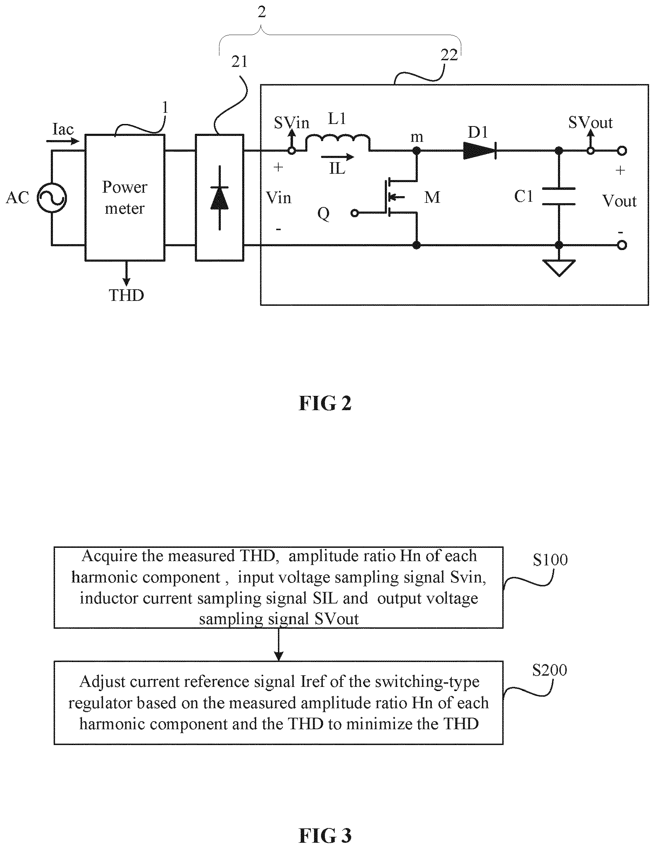

FIG. 2 is a schematic diagram of an example power stage circuit of an example power factor correction circuit according to embodiments of the present disclosure. As shown in FIG. 2, power factor corrector 2 can include rectifier circuit 21 and switching-type regulator 22. Rectifier circuit 21 is configured d to convert an alternating current Iac inputted from an input source AC into a direct current. Rectifier circuit 21 can be implemented by various conventional rectifier circuits, such as a half bridge rectifier circuit or a full bridge rectifier circuit. Switching-type regulator 22 is configured to perform power factor correction in response to switch control signal Q. In FIG. 2, switching-type regulator 22 with a boost topology is described as an example. However, it is to be understood by those skilled in the art that, switching-type regulator 22 can also have other topologies including but not limited to a buck topology, a buck-boost topology and a flyback topology. In FIG. 2, switching-type regulator 22 includes inductor L1 for storing energy, switch M, diode D1 and capacitor C1. Inductor LI is connected between an input port and middle terminal m. Switch M is connected between the middle terminal m and a grounded terminal. Diode D1 configured to rectify an inductor current is connected between middle terminal m and an output terminal. Capacitor C1 configured to filter an output voltage is connected between the output terminal and the ground terminal. Switch M is configured to be switched on/off in response to switch control signal Q, to control an inductor current, so as to correct a power factor actively.

In order to reduce the THD, in the embodiment, the power stage circuit is further provided with multiple sampling circuits to sample input voltage Vin, output voltage Vout and inductor current IL of switching-type regulator 22, and output input voltage sampling signal SVin, output voltage sampling signal SVout and inductor current sampling signal SIL. Each of the above sampling signals is transmitted to controller 3 for generating switch control signal Q. In addition, power meter 1 is connected to an input port of the power factor corrector 2 and is configured to measure the THD and an amplitude ratio Hn of each harmonic component at the input port. The measured THD and the measured amplitude ratio of each harmonic component at the input port are also transmitted to controller 3 for generating switch control signal Q.

Controller 3 is configured to generate switch control signal Q based on input voltage sampling signal SVin, output voltage sampling signal SVout, inductor current sampling signal SIL, measured total harmonic distortion THD and measured amplitude ratio Hn of each harmonic component, to control switching-type regulator 22. Specifically, controller 3 controls the inductor current of switching-type regulator 22 to be close to a current reference signal, and the current reference signal represents an expected inductor current. Inductor current reference signal SIL can characterize an average value, a peak value or a real-time variation value of inductor current IL. Controller 3 adjusts the current reference signal based on the measured total harmonic distortion THD and the measured amplitude ratio Hn of the harmonic component, to minimize the THD while performing the power factor correction. In an embodiment, controller 3 performs a digital control strategy to generate switch control signal Q. That is, controller 3 inputs the measured total harmonic distortion THD into a control loop, to generate switch control signal Q in a closed-loop control manner for minimizing the THD. Therefore, the current reference signal is adjusted based on the measured THD and the measured amplitude ratio of each harmonic component, to minimize the THD while performing power factor correction, such that the total harmonic distortion can be reduced without performing compensation design specifically for a category of factors affecting THD indicators, thereby simplifying the control method.

As described above, the harmonic distortion indicates that an output signal includes other harmonic component compared with an input signal due to a nonlinear element in a system. Since an alternating current inputted to a power stage circuit of a power factor correction circuit is a periodic signal. The periodic signal can be analyzed as a superposition of a direct-current signal and sinusoidal signals with different frequencies by the Fourier analysis. Here, each harmonic component is a sinusoidal signal and the frequency of the harmonic component is multiple times that of the sinusoidal signal. Therefore, at least one predetermined harmonic component with the same effective value and an opposite phase compared with each harmonic component of the periodic signal can be superimposed (that is, opposite superposition) on the periodic signal to counteract each harmonic component, thereby reducing the THD. Specifically, an amplitude ratio of one of the at least one predetermined harmonic component is set based on the amplitude ratio Hn of a corresponding harmonic component of the input signal measured by power meter 1, and then a phase of each predetermined harmonic component is adjusted to minimize the THD, thereby achieving an same effect of oppositely superimposing the harmonic component with the same effective value. Further, the inductor current of switching-type regulator 22 is substantially the same as a current of the inputted alternating signal, that is, IL=Iac. In addition, controller 3 includes a current control loop to control inductor current IL to be close to current reference signal Iref. Therefore, at least one predetermined harmonic component can be superimposed on the current reference signal Iref to adjust the current reference signal Iref, so as to adjust inductor current IL, thereby counteracting unnecessary harmonic components in the inputted alternating current, thus reducing or minimizing the THD

In an embodiment, even harmonic components (e.g., a second harmonic component, a fourth harmonic component and the like) may be counteracted during rectification due to symmetrical phases. Therefore, it is only required to perform opposite superimposition on odd harmonic components, to greatly reduce the total harmonic distortion. However, it should be understood that opposite superimposition may be performed on both the even harmonic components and the odd harmonic components, to reduce the total harmonic distortion more accurately, however, this may cause an increased computational complexity.

The one or more predetermined harmonic component is set by a system designer. For example, controller 3 may be configured to perform compensation only on a third harmonic component of the input signal. Specifically, the amplitude ratio of a predetermined third harmonic component is set based on amplitude ratio H3 of the third harmonic component of the input signal measured by power meter 1, and a phase of the predetermined third harmonic component is adjusted, such that the predetermined third harmonic component has a phase opposite to that of the third harmonic component of the input signal. In a case that the input signal also includes a fifth harmonic component or a seventh harmonic component, compensation may be not performed on the fifth harmonic component and the seventh harmonic component of the input signal. In that case, the system has a low complexity and a fast reaction speed. For example, controller 3 may further be configured to perform compensation on a third harmonic component, a fifth harmonic component, a seventh harmonic component, a ninth harmonic component of the input signal and etc. In a case that the input signal only includes a fifth harmonic component and a seventh harmonic component, based on amplitude ratio Hn of each harmonic component of the input signal measured by power meter 1, amplitude ratios of predetermined third harmonic component and ninth harmonic component are set to be zero, and amplitude ratios of predetermined fifth harmonic component and seventh harmonic component are set not to be zero. In addition, phases of the predetermined fifth harmonic component and seventh harmonic component are adjusted, such that the predetermined fifth harmonic component and seventh harmonic component have phases respectively opposite to that of the fifth harmonic component and the seventh harmonic component of the input signal. Thus, multiple harmonic components of the input signal can be performed compensation.

In the embodiment, the measured total harmonic distortion is inputted into the control loop, to determine a phase of each predetermined harmonic component, such that the phase of each predetermined harmonic component is opposite to the phase of a corresponding harmonic component of the input signal. In an embodiment, controller 3 is configured to adjust, after setting the amplitude ratio of each predetermined harmonic component based on the amplitude ratio Hn of a corresponding harmonic component of the input signal measured by power meter 1, the phase of each predetermined harmonic component based on the measured total harmonic distortion to minimize the total harmonic distortion.

FIG. 3 is a flowchart of a control method according to the present disclosure. As shown in FIG. 3, the method includes the following steps S100 and S200.

In step S100, a total harmonic distortion THD, an amplitude ratio Hn of each harmonic component, input voltage sampling signal SVin, an inductor current sampling signal SIL and output voltage sampling signal SVout are measured and acquired.

In step S200, current reference signal Iref is adjusted based on amplitude ratio Hn of each predetermined harmonic component and the total harmonic distortion THD to minimize the total harmonic distortion THD

Further, in step S200, power factor correction is also performed in other control loops based on input voltage sampling signal SVin, the inductor current sampling signal SIL and output voltage sampling signal SVout.

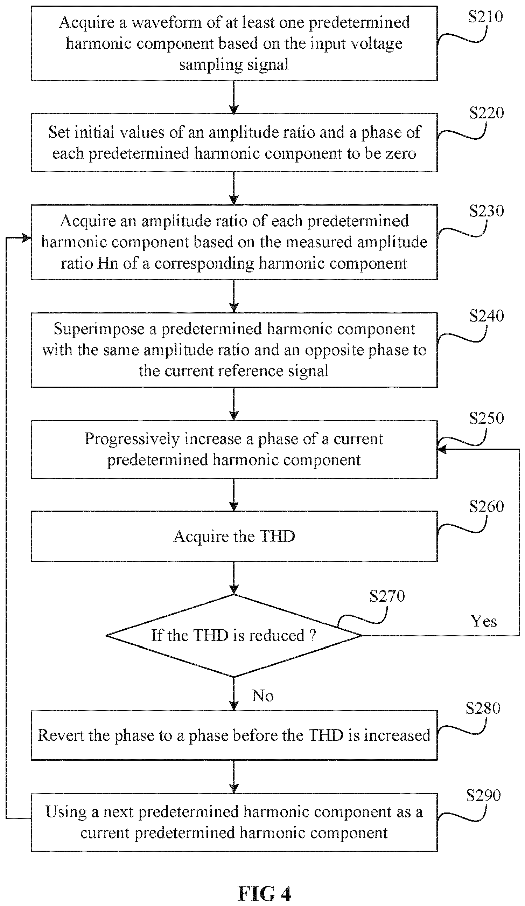

Specifically, in step S200, the total harmonic distortion THD can be minimized by setting an amplitude ratio of each predetermined harmonic component and adjusting a phase of each predetermined harmonic component. FIG. 4 is a flowchart of a first method for adjusting a phase of a harmonic component according to the present disclosure. As shown in FIG. 4, the phase of each predetermined harmonic component is adjusted in a phase increasing manner. The method includes the following steps S210 to S290.

In step S210, at least one predetermined harmonic component is acquired based on the input voltage sampling signal.

Since there may be multiple harmonic components in an input voltage, compensation is generally performed on only one or more harmonic components with a frequency close to a fundamental frequency. The at least one predetermined harmonic components are ranked in advance respectively, and an amplitude ratio of each predetermined harmonic component is set in order based on the measured amplitude ratio Hn of corresponding harmonic components, and a phase of each predetermined harmonic component is adjusted one-by-one.

In step S220, initial values of the amplitude ratio and the phase of each predetermined harmonic component are set to be zero t.

In step S230, the amplitude ratio of each predetermined harmonic component is acquired based on the measured amplitude ratio Hn of corresponding harmonic components.

In step S240, the predetermined harmonic component with the same amplitude ratio compared with the current reference signal is superimposed to the current reference signal.

Specifically, a predetermined harmonic component is acquired. Then, the predetermined harmonic component is multiplied by an amplitude ratio corresponding to the predetermined harmonic component to obtain a multiplied signal, and the multiplied signal is superimposed on current reference signal Iref.

In step S250, the phase of the predetermined harmonic component is progressively increased. The phase of the predetermined harmonic component may be increased with a predetermined step length, or with changed increased amplitude, which is calculated for every operation.

In step S260, the THD is measured again after adjusting the current reference signal.

In step S270, it is determined whether the THD is reduced after progressively increasing the phase of the predetermined harmonic component. In a case that the THD is reduced, the process proceeds to step S250, to progressively increase the phase of the predetermined harmonic component. In a case that the THD is not reduced, it is indicated that the phase of the predetermined harmonic component before performing the progressive increase operation is opposite to the phase of the harmonic component in the input signal. Then the process proceeds to step S280.

In step S280, the phase of the predetermined harmonic component is reverted to the phase before the THD is increased.

In addition, the predetermined harmonic component having the phase before the THD is increased is superimposed on the current reference signal.

In step S290, a next predetermined harmonic component is in turn used as a current predetermined harmonic component, and the process returns to the step S230 to adjust the phase of the next predetermined harmonic component.

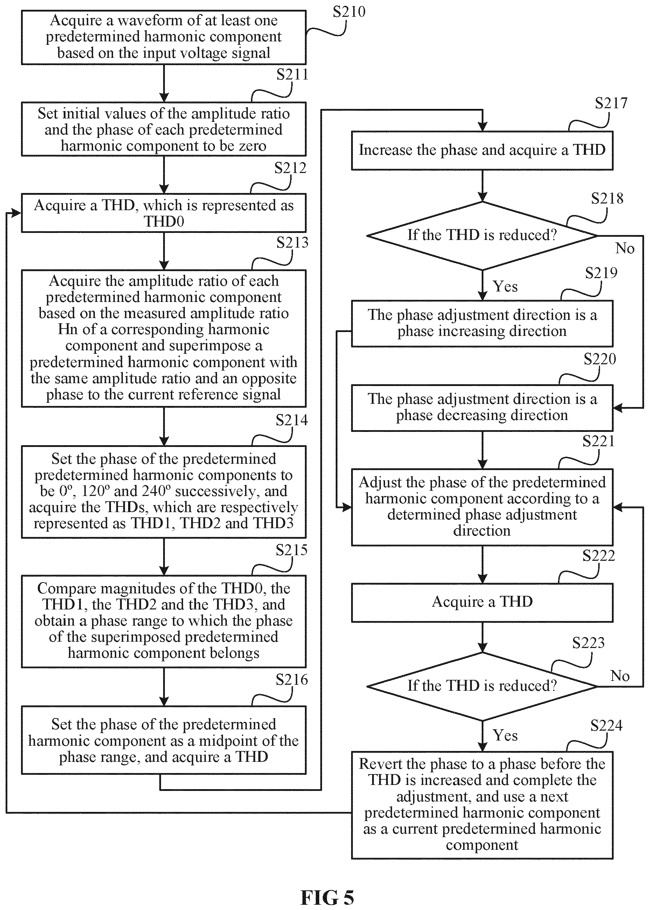

The method above for adjusting a phase in a progressive increase manner is performed easily. However, when the phase is large, it may be not easy to obtain the phase of the predetermined harmonic component to minimize the THD. FIG. 5 is a flowchart of a second method for adjusting a phase of a harmonic component according to the present disclosure. In this method, a phase of the predetermined harmonic component is adjusted in a phase partitioned manner which can easily obtain the phase of the predetermined harmonic component to minimize the THD. Specifically, the method includes the following steps S210 to S224.

In step S210, at least one predetermined harmonic component is acquired based on an input voltage sampling signal.

Since there may be multiple harmonic components in an input voltage, compensation is generally performed only on one or more harmonic components with a frequency close to a fundamental frequency. The at least one predetermined harmonic component are ranked in advance, and an amplitude ratio of each predetermined harmonic component is set in order based on the measured amplitude ratio Hn of corresponding harmonic components, and a phase of each predetermined harmonic component is adjusted one-by-one.

In step S211, initial values of the amplitude ratio and the phase of each predetermined harmonic component are set to be zero.

In step S212, a total harmonic distortion THD is acquired, which is represented by THD0.

In step S213, the amplitude ratio of each predetermined harmonic component is acquired based on the measured amplitude ratio Hn of corresponding harmonic components, and the predetermined harmonic component with the same amplitude ratio compared with the current reference signal is superimposed to the current reference signal.

Specifically, the predetermined harmonic component is acquired. Then, the predetermined harmonic component is multiplied by the amplitude ratio corresponding to the predetermined harmonic component to obtain a multiplied signal, and the multiplied signal is superimposed on the current reference signal Iref.

In step S214, the phase of the predetermined harmonic component is set to be 0°, 120° and 240° successively, and the total harmonic distortions THD are acquired, which are respectively represented by THD1, THD2 and THD3.

In step S215, magnitudes of the THD0, the THD1, the THD2 and the THD3 are compared with each other, and a phase range to which the phase of the predetermined harmonic component belongs is obtained.

Specifically, in a case that the THD1, the THD2 and the THD3 are greater than the THD0, it is indicated that it is unsuitable to perform compensation on a harmonic component of the input signal corresponding to the predetermined harmonic component (i.e., the input signal not includes the harmonic component corresponding to the predetermined harmonic component). Magnitudes of the THD1, the THD2 and the THD3 are compared with each other, and the phase range to which the phase of the predetermined harmonic component belongs is obtained.

It is to be noted that there are various partition manners in step S214 and step S215. Moreover, only one embodiment is shown herein and the present disclosure is not limited thereto.

In step S216, the phase of the superimposed predetermined harmonic component is set as a midpoint of a phase range and the total harmonic distortion THD is acquired again.

In step S217, the phase is increased and the total harmonic distortion THD is acquired.

In step S218, it is determined whether the total harmonic distortion THD is reduced after increasing the phase. In a case that the THD is reduced, it is indicated that a phase adjustment direction is a phase-increasing direction and the process proceeds to step S219. In a case that the THD is not reduced, it is indicated that a phase adjustment direction is a phase-decreasing direction and the process proceeds to step S220.

In step S219, the phase adjustment direction is the phase-increasing direction.

In step S220, the phase adjustment direction is the phase-decreasing direction.

In step S221, the phase of the predetermined harmonic component is adjusted continually based on the determined phase adjustment direction.

Specifically, in a case that the phase adjustment direction is the phase-increasing direction, the current phase is progressively increased. In a case that the phase adjustment direction is the phase-decreasing direction, the current phase is progressively decreased.

In step S222, the THD is acquired.

In step S223, it is determined whether the total harmonic distortion THD is reduced. In a case that the total harmonic distortion THD is reduced, the process proceeds to step S221, to adjust the phase of the predetermined harmonic component continually according to the determined phase adjustment direction. In a case that the total harmonic distortion THD is not reduced, it is indicated that the phase of the predetermined harmonic component before the progressive increase operation is opposite to the phase of the corresponding harmonic component in the input signal, therefore the process proceeds to step S224.

In step S224, the phase is reverted to a phase before the THD is not increased, and the phase adjustment is completed. The predetermined harmonic component having the phase before the total harmonic distortion is not increased is superimposed on the current reference signal. A next harmonic component is in turn used as a current predetermined harmonic component, and the process returns to the step S212 to adjust the phase of the next predetermined harmonic component.

As described above, for the predetermined harmonic components, an amplitude ratio of each predetermined harmonic component is set based on the measured amplitude ratio Hn of corresponding harmonic components and the phase of each predetermined harmonic component is adjusted in an one-by-one manner, such that the phase of the predetermined harmonic component is opposite to the phase of a corresponding harmonic component in the input signal, thereby minimizing a THD. It is to be noted that, the adjusting of the phase of each predetermined harmonic component is maintained during operation of a system, such that the THD of the system is reduced during the whole operation.

It is to be noted that manners of adjusting a phase of each predetermined harmonic component is not limited to the above two manners. For example, a phase for minimizing the THD may also be acquired by continually increasing the phase within a phase range after phase partition. A protection scope of the present disclosure lies in a method for adjusting a phase of a predetermined harmonic component in any manners to minimize a THD

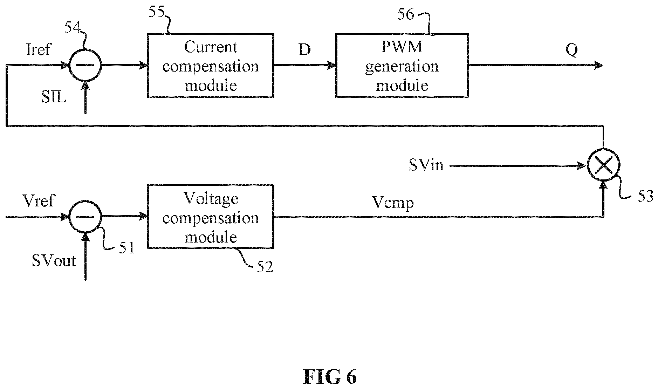

FIG. 6 is a diagram showing a data flow in a controller according to the conventional technology. As shown in FIG. 6, the controller controls inductor current IL in a closed-loop control manner. Specifically, the controller controls output voltage Vout by a voltage loop, and controls inductor current IL by a current loop. In the conventional technology, a difference between output voltage sampling signal SVout and voltage reference signal Vref is acquired by subtractor 51, and compensation signal Vcmp is outputted from voltage compensation module 52. Compensation signal Vcmp is multiplied by input voltage sampling signal Vin by multiplier 53. A product signal outputted from multiplier 53 serves as current reference signal Iref and is inputted to subtractor 54. Subtractor 54 acquires a difference between current reference signal Iref and inductor current sampling signal SIL, and outputs signal D for characterizing a desired duty ratio through current compensation module 55. PWM generation module 56 generates switch control signal Q based on signal D for characterizing a desired duty ratio. A controller in conventional technology lacks of a universal mechanism to compensate a total harmonic distortion of a circuit.

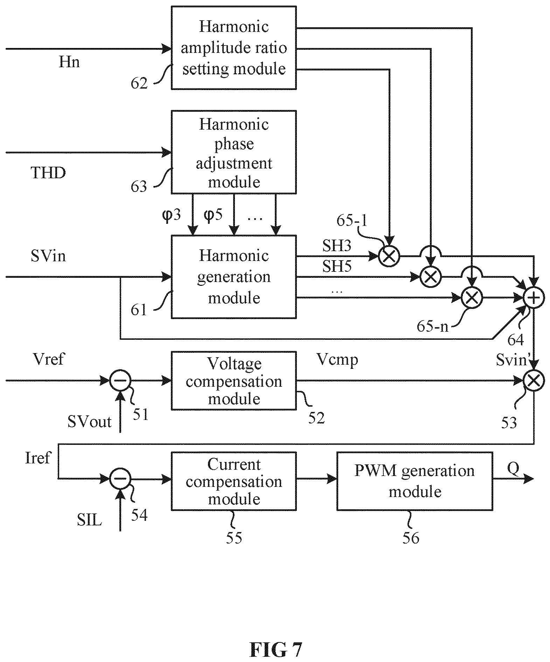

FIG. 7 is a diagram showing a data flow in a controller according to a first embodiment of the present disclosure. As shown in FIG. 7, in addition to subtractor 51, voltage compensation module 52, multiplier 53, subtractor 54, current compensation module 55 and PWM generation module 56, the controller further includes harmonic generation module 61, harmonic amplitude ratio setting module 62, harmonic phase adjustment module 63, adder 64 and multipliers 65-1 to 65-n, where the number of the multipliers is equal to the number of the predetermined harmonic components. A difference between output voltage sampling signal SVout and voltage reference signal Vref is acquired by subtractor 51. The difference is inputted to voltage compensation module 52, and compensation signal Vcmp is outputted from voltage compensation module 52. Harmonic amplitude ratio setting module 62 is configured to set the amplitude ratio of each predetermined harmonic component based on the measured amplitude ratio Hn of corresponding harmonic components. Harmonic phase adjustment module 63 is configured to output the phase of each predetermined harmonic component to harmonic generation module 61 based on the measured total harmonic distortion THD and adjust the phase to minimize the total harmonic distortion. Harmonic generation module 61 is configured to generate each predetermined harmonic component based on input voltage sampling signal SVin, for example, third harmonic component SH3, fifth harmonic component SH5 and the like, and adjusts the phase of each predetermined harmonic component based on the phase outputted from harmonic phase adjustment module 63. The amplitude ratio of each predetermined harmonic component outputted from harmonic amplitude ratio setting module 62 is multiplied by corresponding predetermined harmonic components with a phase outputted from harmonic generation module 61 respectively in the multipliers 65-1 to 65-n to generate at least one voltage harmonic component. The voltage harmonic components corresponding to predetermined harmonic components have the same amplitude ratio and the opposite phase with respect to corresponding harmonic components of the input signal. All voltage harmonic components are superimposed on the input voltage sampling signal in adder 64 to acquire an output parameter SVin' which is expressed by:

**[0091]** $$\text{SVin'=SVin+SH3*Ratio3+SH5*Ratio5+}\ldots$$

In the above equation, SVin' represents a parameter obtained after the voltage harmonic components are superimposed on the input voltage sampling signal, Ratioi represents an amplitude ratio of an i-th predetermined harmonic component, which is set by harmonic amplitude ratio setting module 62 based on the amplitude ratio Hn of each harmonic component measured by the power meter. SHi represents an i-th predetermined harmonic component with a phase. SHi*Ratioi represents an i-th voltage harmonic component corresponding to the i-th predetermined harmonic component.

Multiplier 53 inputs the signal SVin' and compensation signal Vcmp and outputs a product signal of signal SVin' and compensation signal Vcmp as current reference signal Iref, which is expressed by:

$$\text{Iref=Vcmp*(SVin+SH3*Ratio3+SH5*Ratio5+}\ldots\text{)}$$

$$\text{=Vcmp*SVin+Vcmp*SH3*Ratio3+Vcmp*SH5*Ratio5+}\ldots$$

That is, with above setting, multiple predetermined harmonic components obtained based on an input voltage can be superposed on current reference signal Iref to adjust current reference signal Iref.

Harmonic phase adjustment module 63 may adjust the phase of each predetermined harmonic component with the method as shown in FIG. 4 or FIG. 5 until the measured total harmonic distortion (THD) is not reduced. With the above control method, the phase of each predetermined harmonic component superimposed on current reference signal Iref is opposite to the phase of corresponding harmonic components in the input signal, thereby controlling the inductor current to be close to current reference signal Iref to eliminate the harmonic component in the system thus minimizing the total harmonic distortion THD

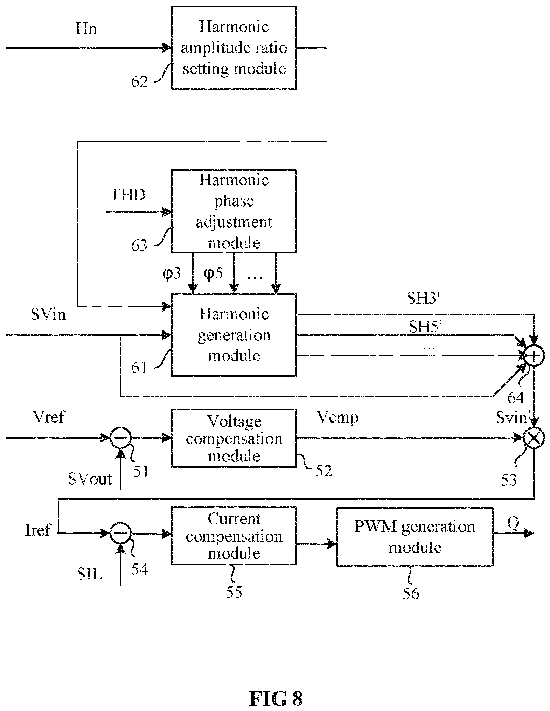

FIG. 8 is a diagram showing a data flow in a controller according to a second embodiment of the present disclosure. In addition to subtractor 51, voltage compensation module 52, multiplier 53, subtractor 54, current compensation module 55 and PWM generation module 56, the controller further includes harmonic generation module 61, harmonic amplitude ratio setting module 62, harmonic phase adjustment module 63, and adder 64. Harmonic generation module 61 is configured to generate each predetermined harmonic component based on the input voltage sampling signal SVin, for example, third harmonic component SH3, a fifth harmonic component SH5 and the like. Harmonic amplitude ratio setting module 62 is configured to set, based on the measured corresponding amplitude ratio Hn of each harmonic component, the amplitude ratio of predetermined harmonic components generated by harmonic generation module 61. After each predetermined harmonic component is multiplied by the amplitude ratio of corresponding predetermined harmonic components, harmonic phase adjustment module 63 is configured to output a phase of each predetermined harmonic component to harmonic generation module 61 based on the measured total harmonic distortion THD and adjust the phase to minimize the total harmonic distortion. At at least one voltage harmonic component outputted from harmonic generation module 61 corresponding to at least one predetermined harmonic component have the same amplitude ratio and an opposite phase with respect to corresponding harmonic components of the input signal. The embodiment shown in FIG. 8 is the same as the first embodiment shown in FIG. 7 except that, a phase is adjusted after a product signal is obtained by multiplying each predetermined harmonic component by the corresponding amplitude ratio of each predetermined harmonic component

According to the first embodiment and the second embodiment of the present disclosure, the measured total harmonic distortion THD is used for feedback, such that the total harmonic distortion can be directly adjusted in a closed-loop manner. In such case, the total harmonic distortion can be reduced without performing compensation specifically for a category of factors affecting total harmonic distortion indicators, thereby simplifying the control method.

A method for superimposing at least one harmonic component to adjust the current reference signal is not limited to the above manners. Those skilled in the art may also modify parameters and modules described above to achieve the same object. For example, in the first embodiment and the second embodiment, each component in the SVin' is multiplied by the Vcmp respectively, that is, the SVin, the SH3*Ratio3, SH5*Ratio5...are multiplied by the Vcmp respectively. Then the obtained product signals are added to obtain a sum signal, which is used as the current reference signal Iref, that is,

$$Iref=Vcmp*SVin+Vcmp*SH3*Ratio3+Vcmp*SH5*Ratio5+…$$

With the above method, the same function can be achieved as the first embodiment and the second embodiment.

It should further be understood that above methods, processes, units and modules may be implemented by physical circuits or components or embodied as code and/or data. The code and/or data may be stored on a readable storage medium. When reading and executing the above code and/or data, a processor performs the methods and processes embodied as data structures and code and stored on the readable storage medium.

The controller described according to the present disclosure may be implemented in various ways. For example, these techniques may be implemented in hardware, firmware, software, or a combination thereof. For a hardware implementation, the controller may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described in the present disclosure, or a combination thereof. For firmware or software implementation, the controller the present disclosure may be implemented by modules (e.g., procedures, functions) for performing the functions described herein. These software codes can be stored in a memory and executed by a processor. The memory may be implemented in the processor or outside the processor. In the latter case, the memory may be communicatively connected to the processor in various manners, which is well known in the art.

Embodiments of the present disclosure are described below in conjunction with operation waveform diagrams

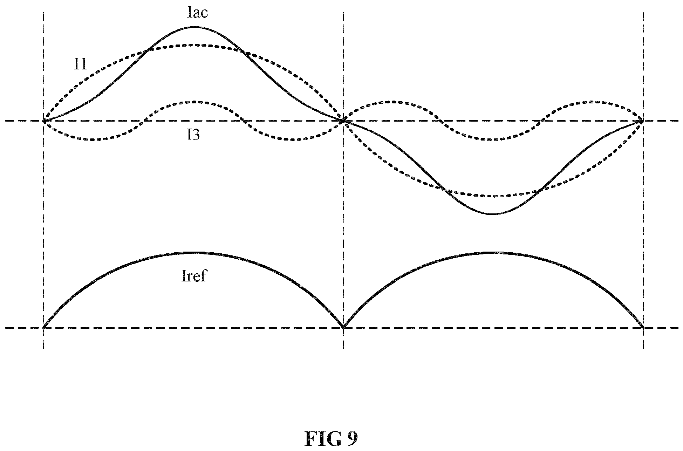

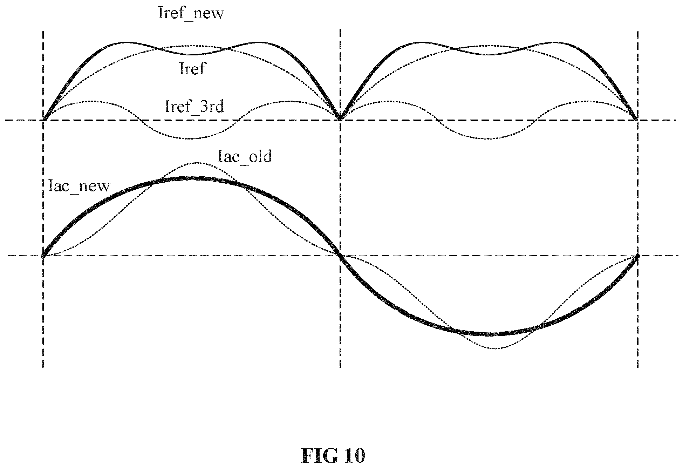

FIG. 9 is an operation waveform diagram of an example power factor correction circuit according to an embodiment of the present disclosure and FIG. 10 is an operation waveform diagram of another example power factor correction circuit according to another embodiment of the present disclosure. As shown in FIG. 9, given that the total harmonic distortion of input alternating current Iac is 25%, and there is only a third harmonic component. In FIG. 9, Iac represents a waveform of an input current of a power factor correction circuit, I1 represents a waveform of a fundamental current, and 13 represents a waveform of the third harmonic component, and Iac=I1+I3. When a system operates, a sinusoidal wave with the same phase and waveform as an input voltage Vin of switching-type regulator 22 is used as a current reference signal. In this case, the total harmonic distortion measured by the power meter 1 is 25%. Controller 3 can acquire, based on a waveform of input voltage sampling signal SVin, a waveform of a third harmonic component of an input voltage (that is, a triple frequency sinusoidal signal) corresponding to the input voltage sampling signal. Further, controller 3 superposes the opposite third harmonic component Iref_3rd on the input voltage, and an obtained current reference signal Iref new is as shown in FIG. 10. In addition, controller 3 set an amplitude ratio of the third harmonic component according to the measure third harmonic component of the input signal, and the phase of the third harmonic component is adjusted based on a measured total harmonic distortion THD, the phase is adjusted until a minimum total harmonic distortion is obtained. After the compensation is performed on the third harmonic component, a comparison of input current Iac_new obtained after the compensation is performed to an input current Iac old before the compensation is performed is as shown in FIG. 10. It can be seen that the third harmonic component of the input current is eliminated maximally. In a case that the predetermined harmonic component further includes a fifth harmonic component, a seventh harmonic component and the like, the adjustment process may be repeated to minimize the total harmonic distortion.

## Claims

1. A power factor correction circuit, comprising:

   a power meter configured to measure a total harmonic distortion, THD, and an amplitude ratio of each harmonic component at an input port;
   a switching-type regulator that is controllable by a switch control signal in order to adjust a power factor; and
   a controller configured to generate the switch control signal to control the switching-type regulator to perform power factor correction, wherein the controller decreases the THD by adjusting a current reference signal according to the measured THD and the amplitude ratio of each harmonic component, wherein the controller is configured to adjust the current reference signal by superimposing at least one predetermined harmonic component on the current reference signal,
   **characterized in that**
   the controller is configured to adjust, based on the measured THD, a phase of each of the at least one predetermined harmonic component to minimize the THD

2. The power factor correction circuit according to claim 1, wherein the controller is further configured to:

   set, based on the measured amplitude ratio of a corresponding harmonic component, an amplitude ratio of the predetermined harmonic component; and
   adjust the phase of the predetermined harmonic component in a predetermined order until the measured THD is no longer decreased.

3. The power factor correction circuit according to claim 2, wherein the phase of the predetermined harmonic component is adjusted by progressively increasing the phase from 0 until the measured THD is no longer decreased.

4. The power factor correction circuit according to claim 2, wherein phase partition is performed, and a phase range where the phase of the predetermined harmonic component is located is determined, and the phase of the predetermined harmonic component is adjusted within the phase range until the measured THD is no longer decreased.

5. The power factor correction circuit according to claim 4, wherein a midpoint of the phase range where the phase of the harmonic component is located is determined as a reference point, and whether a phase adjustment direction is a phase increasing direction or a phase decreasing direction is determined, and the phase of the predetermined harmonic component is adjusted based on the determined phase adjustment direction from the reference point until the measured THD is no longer decreased.

6. The power factor correction circuit according to claim 1, wherein the controller is configured to perform at least one of:

   a) superimposing (64) at least one voltage harmonic component corresponding to the at least one predetermined harmonic component on an input voltage sampling signal (SVin) to generate a superimposition signal, wherein the voltage harmonic component has a same amplitude ratio as a corresponding harmonic component at the input port and has an opposite phase to the corresponding harmonic component; and multiplying (53) the superimposition signal by a compensation signal (Vcmp) to generate the current reference signal (Iref), wherein the input voltage sampling signal represents an input voltage of the switching-type regulator, the predetermined harmonic component is acquired based on the input voltage sampling signal, and the compensation signal (Vcmp)) represents a difference between a voltage reference signal (Vref) and an output voltage (SVout); or
   b) multiplying at least one voltage harmonic component corresponding to the at least one predetermined harmonic component by the compensation signal (Vcmp) respectively to generate at least one multiplied signal, wherein the voltage harmonic component has a same amplitude ratio as a corresponding harmonic component at the input port and has an opposite phase to the corresponding harmonic component; and superimposing all the at least one multiplied signal on a product signal of the input voltage sampling signal (SVin) and the compensation signal (Vcmp) to generate the current reference signal (Iref), wherein the input voltage sampling signal (SVin) represents an input voltage of the switching-type regulator, the predetermined harmonic component is acquired based on the input voltage sampling signal, and the compensation signal represents the difference between the voltage reference signal (Vref) and the output voltage (SVout).

7. The power factor correction circuit according to claim 6, wherein the voltage harmonic component is obtained by acquiring a product signal of the predetermined harmonic component and the amplitude ratio corresponding to the predetermined harmonic component and then performing phase adjustment on the product signal.

8. The power factor correction circuit according to claim 6, wherein the voltage harmonic component is obtained by performing phase adjustment on the predetermined harmonic component to generate a first signal, and then acquiring a product signal of the first signal and the amplitude ratio corresponding to the predetermined harmonic component.

9. The power factor correction circuit according to claim 1, wherein each of the at least one predetermined harmonic component is adjacent in frequency to a fundamental wave.

10. A control method for controlling a switching regulator to perform power factor correction, wherein the control method comprises:

a) measuring a total harmonic distortion, THD, and an amplitude ratio of each harmonic component at an input port;
b) adjusting, based on the measured THD and the amplitude ratio of each harmonic component, a current reference signal of the switching-type regulator to minimize the THD, wherein the current reference signal is adjusted by superimposing at least one predetermined harmonic component on the current reference signal,

**characterized in that** adjusting the current reference signal of the switching-type regulator comprises:
adjusting, based on the measured THD, a phase of each of the at least one predetermined harmonic component to minimize the THD

11. The control method according to claim 10, wherein the amplitude ratio of the predetermined harmonic component is set based on the measured amplitude ratio of a corresponding harmonic component, and then the phase of the predetermined harmonic component is adjusted in a predetermined order until the measured THD is no longer decreased.

12. The control method according to claim 11, wherein the phase of the predetermined harmonic component is adjusted by progressively increasing the phase from 0 until the measured THD is no longer decreased.

13. The control method according to claim 11, wherein phase partition is performed, and a phase range where the phase of the predetermined harmonic component is located is determined, and the phase of the predetermined harmonic component is adjusted within the phase range until the measured THD is no longer decreased.

14. The control method according to claim 13, wherein a midpoint of the phase range where the phase of the harmonic component is located is determined as a reference point, and whether a phase adjustment direction is a phase increasing direction or a phase decreasing direction is determined, and the phase of the predetermined harmonic component is adjusted based on the determined phase adjustment direction from the reference point until the measured THD is no longer decreased.

15. The control method according to claim 10, wherein the method further comprises at least one of:

a) superimposing at least one voltage harmonic component corresponding to the at least one predetermined harmonic component on an input voltage sampling signal to generate a superimposition signal, wherein the voltage harmonic component has a same amplitude ratio as a corresponding harmonic component at the input port and has an opposite phase to the corresponding harmonic component; and multiplying the superimposition signal by a compensation signal to generate the current reference signal, wherein the input voltage sampling signal represents an input voltage of the switching-type regulator, and the predetermined harmonic component is acquired based on the input voltage sampling signal, and the compensation signal represents a difference between a voltage reference signal and an output voltage; or
b) multiplying at least one voltage harmonic component corresponding to the at least one predetermined harmonic component by the compensation signal respectively to generate at least one multiplied signal, wherein the voltage harmonic component has a same amplitude ratio as a corresponding harmonic component at the input port and has an opposite phase to the corresponding harmonic component; and superimposing all the at least one multiplied signal on a product signal of the input voltage sampling signal and the compensation signal to generate the current reference signal, wherein the input voltage sampling signal represents an input voltage of the switching-type regulator, and the predetermined harmonic component is acquired based on the input voltage sampling signal, and the compensation signal represents the difference between the voltage reference signal and the output voltage.

**Patentansprüche**

1. Leistungsfaktorkorrekturschaltung, umfassend:

   einen Leistungsmesser, der ausgebildet ist, eine gesamte harmonische Verzerrung, THD, und ein Amplitudenverhältnis jeder harmonischen Komponente an einem Eingangsport zu messen;
   einen Schaltregler, der durch ein Schaltersteuersignal steuerbar ist, um einen Leistungsfaktor einzustellen; und
   eine Steuerung, die zum Erzeugen des Schaltersteuersignals ausgebildet ist, um den Schaltregler zur Durchführung einer Leistungsfaktorkorrektur anzusteuern, wobei die Steuerung die THD durch Einstellung eines Stromreferenzsignals gemäß der gemessenen THD und dem Amplitudenverhältnis jeder harmonischen Komponente verringert, wobei die Steuerung ausgebildet ist, das aktuelle Referenzsignal durch Überlagerung mindestens einer vorbestimmten harmonischen Komponente auf dem aktuellen Referenzsignal einzustellen,
   **gekennzeichnet dadurch, dass**
   die Steuerung ausgebildet ist, basierend auf der gemessenen THD eine Phase von jeder der mindestens einen vorbestimmten harmonischen Komponente einzustellen, um die THD zu minimieren.

2. Leistungsfaktorkorrekturschaltung nach Anspruch 1, wobei die Steuerung ferner ausgebildet ist:

   basierend auf dem gemessenen Amplitudenverhältnis einer entsprechenden harmonischen Komponente ein Amplitudenverhältnis der vorbestimmten harmonischen Komponente zu setzen; und
   die Phase der vorbestimmten harmonischen Komponente in einer vorbestimmten Reihenfolge einzustellen, bis die gemessene THD nicht mehr verringert wird.

3. Leistungsfaktorkorrekturschaltung nach Anspruch 2, wobei die Phase der vorbestimmten harmonischen Komponente durch schrittweise Erhöhung der Phase von 0 eingestellt wird, bis die gemessene THD nicht mehr verringert wird.

4. Leistungsfaktorkorrekturschaltung nach Anspruch 2, wobei eine Phasentrennung durchgeführt wird, und ein Phasenbereich, in dem die Phase der vorbestimmten harmonischen Komponente gelegen ist, bestimmt wird, und wobei die Phase der vorbestimmten harmonischen Komponente innerhalb des Phasenbereichs eingestellt wird, bis die gemessene THD nicht mehr verringert wird.

5. Leistungsfaktorkorrekturschaltung nach Anspruch 4, wobei ein Mittelpunkt des Phasenbereichs, in dem die Phase der harmonischen Komponente gelegen ist, als Referenzpunkt bestimmt wird, und wobei bestimmt wird, ob eine Phaseneinstellungsrichtung eine phasensteigernde Richtung oder eine phasenverringernde Richtung ist, und wobei die Phase der vorbestimmten harmonischen Komponente basierend auf der ermittelten Phaseneinstellungsrichtung von dem Referenzpunkt eingestellt wird, bis die gemessene THD nicht mehr verringert wird.

6. Leistungsfaktorkorrekturschaltung nach Anspruch 1, wobei die Steuerung zur Durchführung mindestens eines der folgenden ausgebildet ist:

   a) Überlagerung (64) mindestens einer spannungsharmonischen Komponente, die der mindestens einen vorbestimmten harmonischen Komponente auf einem Eingangsspannungsabtastsignal (SVin) entspricht, um ein Überlagerungssignal zu erzeugen, wobei die spannungsharmonische Komponente am Eingangsport ein gleiches Amplitudenverhältnis wie eine entsprechende harmonische Komponente aufweist und eine entgegengesetzte Phase zu der entsprechenden harmonische Komponente aufweist; und Multiplizieren (53) des Überlagerungssignal mit einem Kompensationssignal (Vcmp), um das Stromreferenzsignal (Iref) zu erzeugen, wobei das Eingangsspannungsabtastsignal eine Eingangsspannung des Schaltreglers repräsentiert, wobei die vorbestimmte harmonische Komponente basierend auf dem Eingangsspannungsabtastsignal erfasst wird, und wobei das Kompensationssignal (Vcmp) eine Differenz zwischen einem Spannungsreferenzsignal (Vref) und einer Ausgangsspannung (SVout) repräsentiert; oder
   b) entsprechendes Multiplizieren von mindestens einer spannungsharmonischen Komponente, die dem mindestens einem vorbestimmten harmonischen Bauteil entspricht, mit dem Kompensationssignal (Vcmp), um mindestens ein multipliziertes Signal zu erzeugen, wobei die spannungsharmonische Komponente ein gleiches Amplitudenverhältnis wie eine entsprechende harmonische Komponente an dem Eingangsport aufweist und eine entgegengesetzte Phase zu der entsprechenden harmonische Komponente aufweist; und Überlagern des gesamten zumindest einen multiplizierten Signals auf einem Produktsignal des Eingangsspannungsabtastsignals (SVin) und des Kompensationssignals (Vemp), um das Stromreferenzsignal (Iref) zu erzeugen, wobei das Eingangsspannungsabtastsignal (SVin) eine Eingangsspannung des Schaltreglers repräsentiert, wobei die vorbestimmte Komponente basierend auf dem Eingangsspannungsabtastsignal erfasst wird, und wobei das Kompensationssignal die Differenz zwischen dem Spannungsreferenzsignal (Vref) und der Ausgangsspannung (SVout) repräsentiert.

7. Leistungsfaktorkorrekturschaltung nach Anspruch 6, wobei die spannungsharmonische Komponente erhalten wird, indem ein Produktsignal der vorbestimmten harmonischen Komponente und des Amplitudenverhältnisses erfasst wird, das der vorbestimmten harmonischen Komponente entspricht, und dann eine Phaseneinstellung an dem Produktsignal durchgeführt wird.

8. Leistungsfaktorkorrekturschaltung nach Anspruch 6, wobei die spannungsharmonische Komponente erhalten wird, indem eine Phaseneinstellung an der vorbestimmten harmonischen Komponente durchgeführt wird, um ein erstes Signal zu erfassen, und dann ein Produktsignal des ersten Signals und des Amplitudenverhältnisses erhalten wird, das der vorbestimmten harmonische Komponente entspricht.

9. Leistungsfaktorkorrekturschaltung nach Anspruch 1, wobei jede der mindestens einen vorbestimmten harmonischen Komponente an eine Grundwelle frequenzangrenzend ist.

10. Steuerverfahren zum Steuern eines Schaltreglers zur Durchführung einer Leistungsfaktorkorrektur, wobei das Steuerungsverfahren umfasst:

a) Messung einer gesamten harmonischen Verzerrung, THD, und eines Amplitudenverhältnisses jeder harmonischen Komponente an einem Eingangsport;
b) Einstellen, basierend auf der gemessenen THD und dem Amplitudenverhältnis jeder harmonischen Komponente, eines Stromreferenzsignals des Schaltreglers, um die THD zu minimieren,

**dadurch gekennzeichnet, dass** das Einstellen des Stromreferenzsignals des Schaltreglers umfasst:
Einstellen, basierend auf der gemessenen THD, einer Phase von jeder der mindestens einen vorbestimmten harmonischen Komponente, um die THD zu minimieren.

11. Steuerverfahren nach Anspruch 10, wobei das Amplitudenverhältnis der vorbestimmten harmonischen Komponente basierend auf dem gemessenen Amplitudenverhältnis einer entsprechenden harmonischen Komponente gesetzt wird, und dann die Phase der vorbestimmten harmonischen Komponente in einer vorbestimmten Reihenfolge eingestellt wird, bis die gemessene THD nicht mehr verringert wird.

12. Steuerverfahren nach Anspruch 11, wobei die Phase der vorbestimmten harmonischen Komponente durch schrittweise Erhöhung der Phase von 0 eingestellt wird, bis die gemessene THD nicht mehr verringert wird.

13. Steuerverfahren nach Anspruch 11, wobei eine Phasentrennung durchgeführt wird, und ein Phasenbereich, in dem die Phase der vorbestimmten harmonischen Komponente gelegen ist, bestimmt wird, und wobei die Phase der vorbestimmten harmonischen Komponente innerhalb des Phasenbereichs eingestellt wird, bis die gemessene THD nicht mehr verringert wird.

14. Steuerverfahren nach Anspruch 13, wobei ein Mittelpunkt des Phasenbereichs, in dem die Phase der harmonischen Komponente gelegen ist, als Referenzpunkt bestimmt wird, und wobei bestimmt wird, ob eine Phaseneinstellungsrichtung eine phasensteigernde Richtung oder eine phasenverringernde Richtung ist, und wobei die Phase der vorbestimmten harmonischen Komponente basierend auf der ermittelten Phaseneinstellungsrichtung von dem Referenzpunkt eingestellt wird, bis die gemessene THD nicht mehr verringert wird.

15. Steuerverfahren nach Anspruch 10, wobei das Verfahren mindestens eines der folgenden umfasst:

a) Überlagerung mindestens einer spannungsharmonischen Komponente, die der mindestens einen vorbestimmten harmonischen Komponente auf einem Eingangsspannungsabtastsignal entspricht, um ein Überlagerungssignal zu erzeugen, wobei die spannungsharmonische Komponente am Eingangsport ein gleiches Amplitudenverhältnis wie eine entsprechende harmonische Komponente aufweist und eine entgegengesetzte Phase zu der entsprechenden harmonische Komponente aufweist; und Multiplizieren des Überlagerungssignal mit einem Kompensationssignal, um das Stromreferenzsignal zu erzeugen, wobei das Eingangsspannungsabtastsignal eine Eingangsspannung des Schaltreglers repräsentiert, wobei die vorbestimmte harmonische Komponente basierend auf dem Eingangsspannungsabtastsignal erfasst wird, und wobei das Kompensationssignal eine Differenz zwischen einem Spannungsreferenzsignal und einer Ausgangsspannung repräsentiert; oder

b) entsprechendes Multiplizieren von mindestens einer spannungsharmonischen Komponente, die dem mindestens einem vorbestimmten harmonischen Bauteil entspricht, mit dem Kompensationssignal, um mindestens ein multipliziertes Signal zu erzeugen, wobei die spannungsharmonische Komponente ein gleiches Amplitudenverhältnis wie eine entsprechende harmonische Komponente an dem Eingangsport aufweist und eine entgegengesetzte Phase zu der entsprechenden harmonische Komponente aufweist; und Überlagern des gesamten zumindest einen multiplizierten Signals auf einem Produktsignal des Eingangsspannungsabtastsignals und des Kompensationssignals, um das Stromreferenzsignal zu erzeugen, wobei das Eingangsspannungsabtastsignal eine Eingangsspannung des Schaltreglers repräsentiert, wobei die vorbestimmte Komponente basierend auf dem Eingangsspannungsabtastsignal erfasst wird, und wobei das Kompensationssignal die Differenz zwischen dem Spannungsreferenzsignal und der Ausgangsspannung repräsentiert.

## Revendications

1. Circuit de correction de facteur de puissance, comprenant :

un wattmètre configuré pour mesurer une distorsion harmonique totale, THD, et un rapport d'amplitude de chaque composante harmonique au niveau d'un port d'entrée ; un régulateur de type à découpage qui peut être commandé par un signal de commande de commutateur afin d'ajuster un facteur de puissance ; et un dispositif de commande configuré pour générer le signal de commande de commutation pour commander le régulateur de type à découpage pour effectuer une correction de facteur de puissance, dans lequel le dispositif de commande diminue la THD en ajustant un signal de référence de courant en fonction de la THD mesurée et du rapport d'amplitude de chaque composante harmonique, dans lequel le dispositif de commande est configuré pour ajuster le signal de référence de courant en superposant au moins une composante harmonique prédéterminée sur le signal de référence de courant,

**caractérisé en ce que**

le dispositif de commande est configuré pour ajuster, sur la base de la THD mesurée, une phase de chacune d'au moins une composante harmonique prédéterminée afin de minimiser la THD

2. Circuit de correction de facteur de puissance selon la revendication 1, dans lequel le dispositif de commande est en outre configuré pour :

régler, sur la base du rapport d'amplitude mesuré d'une composante harmonique correspondante, un rapport d'amplitude de la composante harmonique prédéterminée ; et ajuster la phase de la composante harmonique prédéterminée dans un ordre prédéterminé jusqu'à ce que la THD mesurée ne soit plus réduite.

3. Circuit de correction de facteur de puissance selon la revendication 2, dans lequel la phase de la composante harmonique prédéterminée est ajustée en augmentant progressivement la phase de 0 jusqu'à ce que la THD mesurée ne soit plus réduite.

4. Circuit de correction de facteur de puissance selon la revendication 2, dans lequel une partition de phase est effectuée, et une plage de phases où se trouve la phase de la composante harmonique prédéterminée est déterminée, et la phase de la composante harmonique prédéterminée est ajustée dans la plage de phase jusqu'à ce que la THD mesurée ne soit plus réduite.

5. Circuit de correction de facteur de puissance selon la revendication 4, dans lequel un point médian de la plage de phases où se trouve la phase de la composante harmonique est déterminé comme point de référence, et si une direction d'ajustement de phase est une direction d'augmentation de phase ou une direction de réduction de phase est déterminée, et la phase de la composante harmonique prédéterminée est ajustée sur la base de la direction d'ajustement de phase déterminée à partir du point de référence jusqu'à ce que la THD mesurée ne soit plus réduite.

6. Circuit de correction de facteur de puissance selon la revendication 1, dans lequel le dispositif de commande est configuré pour effectuer au moins l'une :

a) d'une superposition (64) d'au moins une composante harmonique de tension correspondant à l'au moins une composante harmonique prédéterminée sur un signal d'échantillonnage de tension d'entrée (SVin) pour générer un signal de superposition, dans lequel la composante harmonique de tension a le même rapport d'amplitude qu'une composante harmonique correspondante au niveau du port d'entrée et a une phase opposée à la composante harmonique correspondante ; et de la multiplication (53) du signal de superposition par un signal de compensation (Vcmp) pour générer le signal de référence de courant (Iref), dans lequel le signal d'échantillonnage de tension d'entrée représente une tension d'entrée du régulateur de type à découpage, la composante harmonique prédéterminée est acquise sur la base du signal d'échantillonnage de tension d'entrée, et le signal de compensation (Vcmp)) représente une différence entre un signal de référence de tension (Vref) et une tension de sortie (SVout) ; ou

b) d'une multiplication d'au moins une composante harmonique de tension correspondant à l'au moins une composante harmonique prédéterminée par le signal de compensation (Vcmp) respectivement pour générer au moins un signal multiplié, dans lequel la composante harmonique de tension a un même rapport d'amplitude qu'une composante harmonique correspondante au niveau du port d'entrée et a une phase opposée à la composante harmonique correspondante ; et de la superposition de la totalité de l'au moins un signal multiplié sur un signal produit du signal d'échantillonnage de tension d'entrée (SVin) et du signal de compensation (Vcmp) pour générer le signal de référence de courant (Iref), dans lequel le signal d'échantillonnage de tension d'entrée (SVin) représente une tension d'entrée du régulateur de type à découpage, la composante harmonique prédéterminée est acquise sur la base du signal d'échantillonnage de tension d'entrée, et le signal de compensation représente la différence entre le signal de référence de tension (Vref) et la tension de sortie (SVout)

7. Circuit de correction de facteur de puissance selon la revendication 6, dans lequel la composante harmonique de tension est obtenue en acquérant un signal produit de la composante harmonique prédéterminée et un rapport d'amplitude correspondant à la composante harmonique prédéterminée puis en effectuant un ajustement de phase sur le signal produit.

8. Circuit de correction de facteur de puissance selon la revendication 6, dans lequel la composante harmonique de tension est obtenue en effectuant un ajustement de phase sur la composante harmonique prédéterminée pour générer un premier signal, puis en acquérant un signal produit du premier signal et le rapport d'amplitude correspondant à la composante harmonique prédéterminée.

9. Circuit de correction de facteur de puissance selon la revendication 1, dans lequel chacune de l'au moins une composante harmonique prédéterminée est adjacente en fréquence à une onde fondamentale.

10. Procédé de commande pour commander un régulateur à découpage pour effectuer une correction de facteur de puissance, dans lequel le procédé de commande comprend :

a) la mesure d'une distorsion harmonique totale, THD, et un rapport d'amplitude de chaque composante harmonique au niveau d'un port d'entrée ;
b) l'ajustement, sur la base de la THD mesurée et du rapport d'amplitude de chaque composante harmonique, d'un signal de référence de courant du régulateur de type à découpage pour minimiser la THD, le signal de référence de courant étant ajusté en superposant au moins une composante harmonique prédéterminée sur le signal de référence de courant,

**caractérisé en ce que** le réglage du signal de référence de courant du régulateur de type à découpage comprend : l'ajustement, sur la base de la THD mesurée, d'une phase de chacune de l'au moins une composante harmonique prédéterminée pour minimiser la THD

11. Procédé de commande selon la revendication 10, dans lequel le rapport d'amplitude de la composante harmonique prédéterminée est fixé en fonction du rapport d'amplitude mesuré d'une composante harmonique correspondante, puis la phase de la composante harmonique prédéterminée est ajustée dans un ordre prédéterminé jusqu'à ce que la THD mesurée ne soit plus réduite.

12. Procédé de commande selon la revendication 11, dans lequel la phase de la composante harmonique prédéterminée est ajustée en augmentant progressivement la phase de 0 jusqu'à ce que la THD mesurée ne soit plus réduite.

**13.** Procédé de commande selon la revendication 11, dans lequel une partition de phase est effectuée, et une plage de phases où se trouve la phase de la composante harmonique prédéterminée est déterminée, et la phase de la composante harmonique prédéterminée est ajustée dans la plage de phases jusqu'à ce que la THD mesurée ne soit plus réduite.

**14.** Procédé de commande selon la revendication 13, dans lequel un point milieu de la plage de phases où se trouve la phase de la composante harmonique est déterminé comme point de référence, et si une direction d'ajustement de phase est une direction d'augmentation de phase ou une direction de réduction de phase est déterminée, et la phase de la composante harmonique prédéterminée est ajustée sur la base de la direction d'ajustement de phase déterminée à partir du point de référence jusqu'à ce que la THD mesurée ne soit plus réduite.

**15.** Procédé de commande selon la revendication 10, **caractérisé en ce qu'**il comprend en outre au moins l'une :

a) d'une superposition d'au moins une composante harmonique de tension correspondant à l'au moins une composante harmonique prédéterminée sur un signal d'échantillonnage de tension d'entrée pour générer un signal de superposition, dans lequel la composante harmonique de tension a un même rapport d'amplitude qu'une composante harmonique correspondante au niveau du port d'entrée et a une phase opposée à la composante harmonique correspondante ; et d'une multiplication du signal de superposition par un signal de compensation pour générer le signal de référence de courant, dans lequel le signal d'échantillonnage de tension d'entrée représente une tension d'entrée du régulateur de type à découpage, et la composante harmonique prédéterminée est acquise sur la base du signal d'échantillonnage de tension d'entrée, et le signal de compensation représente une différence entre un signal de référence de tension et une tension de sortie ; ou

b) d'une multiplication d'au moins une composante harmonique de tension correspondant à l'au moins une composante harmonique prédéterminée par le signal de compensation respectivement pour générer au moins un signal multiplié, dans lequel la composante harmonique de tension a un même rapport d'amplitude qu'une composante harmonique correspondante au niveau du port d'entrée et a une phase opposée à la composante harmonique correspondante ; et d'une superposition de la totalité de l'au moins un signal multiplié sur un signal produit du signal d'échantillonnage de tension d'entrée et du signal de compensation pour générer le signal de référence de courant, dans lequel le signal d'échantillonnage de tension d'entrée représente une tension d'entrée du régulateur de type à découpage, et la composante harmonique est acquise sur la base du signal d'échantillonnage de tension d'entrée, et le signal de compensation représente une différence entre le signal de référence de tension et la tension de sortie.

**FIG 1**

**FIG 2**

| Acquire the measured THD, amplitude ratio Hn of each harmonic component, input voltage sampling signal Svin, inductor current sampling signal SIL and output voltage sampling signal SVout | S100 |

| Adjust current reference signal Iref of the switching-type regulator based on the measured amplitude ratio Hn of each harmonic component and the THD to minimize the THD | S200 |

**FIG 3**

Acquire a waveform of at least one predetermined harmonic component based on the input voltage sampling signal — S210

Set initial values of an amplitude ratio and a phase of each predetermined harmonic component to be zero — S220

Acquire an amplitude ratio of each predetermined harmonic component based on the measured amplitude ratio Hn of a corresponding harmonic component — S230

Superimpose a predetermined harmonic component with the same amplitude ratio and an opposite phase to the current reference signal — S240

Progressively increase a phase of a current predetermined harmonic component — S250

Acquire the THD — S260

If the THD is reduced ? — S270

Yes

No

Revert the phase to a phase before the THD is increased — S280

Using a next predetermined harmonic component as a current predetermined harmonic component — S290

**FIG 4**

20

Acquire a waveform of at least one predetermined harmonic component based on the input voltage signal — S210

Set initial values of the amplitude ratio and the phase of each predetermined harmonic component to be zero — S211

Acquire a THD, which is represented as THD0 — S212

Acquire the amplitude ratio of each predetermined harmonic component based on the measured amplitude ratio Hn of a corresponding harmonic component and superimpose a predetermined harmonic component with the same amplitude ratio and an opposite phase to the current reference signal — S213

Set the phase of the predetermined predetermined harmonic components to be 0°, 120° and 240° successively, and acquire the THDs, which are respectively represented as THD1, THD2 and THD3 — S214

Compare magnitudes of the THD0, the THD1, the THD2 and the THD3, and obtain a phase range to which the phase of the superimposed predetermined harmonic component belongs — S215

Set the phase of the predetermined harmonic component as a midpoint of the phase range, and acquire a THD — S216

Increase the phase and acquire a THD — S217

If the THD is reduced? — S218

Yes — S219

No

The phase adjustment direction is a phase increasing direction — S219

The phase adjustment direction is a phase decreasing direction — S220

Adjust the phase of the predetermined harmonic component according to a determined phase adjustment direction — S221

Acquire a THD — S222

If the THD is reduced? — S223

No

Yes

Revert the phase to a phase before the THD is increased and complete the adjustment, and use a next predetermined harmonic component as a current predetermined harmonic component — S224

**FIG 5**

21

**FIG 6**

**FIG 7**

**FIG 8**

**FIG 9**

Iref_new

Iref

Iref_3rd

Iac_old

Iac_new

**FIG 10**

26

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20180269779 A1